# EUROPEAN PATENT APPLICATION

(11) **EP 4 471 164 A1**
(43) Date of publication of application: **04.12.2024**
(21) Application number: 24179215.9
(22) Date of filing: 31.05.2024
(51) Int. Cl.: C21D 8/12, B21D 22/02, C21D 9/00, C22C 38/02, H01F 1/16

(54) **ELECTRICAL EQUIPMENT LAMINATION AND METHOD OF MANUFACTURE THEREFOR**

(30) Priority: 02.06.2023 US 202318328466
(71) Applicant: ABB SCHWEIZ AG, 5400 Baden (CH)
(72) Inventor: ALLEN, Christopher, Maplewood, 63143 (US)
(74) Representative: Maiwald GmbH

(57) **Abstract**

A method for preparing a lamination for use in constructing electrical equipment includes providing a stamped lamination, the stamped lamination having been stamped using a stamping die from a sheet material, the sheet material being made from fully processed, non-grain oriented electrical steel; heating the stamped lamination in an annealing furnace to produce an annealed stamped lamination; and forming an oxidation layer on the annealed stamped lamination to produce an oxidized and annealed stamped lamination.

## Description

### FIELD OF THE DISCLOSURE

The present disclosure generally relates to electrical equipment and, more specifically, rotating electrical equipment such as motors and generators.

### BACKGROUND OF THE INVENTION

Rotating equipment such as electrical motors and generators include rotating components such as rotors and stationary components such as stators. These components are often manufactured from steel. In typical applications, steel laminations are stacked to create the rotor and/or stator components, which are then assembled into the rotating equipment.

When constructing stators and rotors, thin laminations in the cores of electrical machines play a large role and are considered essential to efficiency of the equipment as the laminations, and the boundaries between them, limit the size and strength of induced eddy currents that reduce motor power and generate waste heat during operation.

Eddy current is a term used to describe one or more closed loops of electric current induced in conductors when subjected to magnetic fields, such as within steel that makes up the rotor or stator of an electric motor during operation. One commonly accepted way of minimizing eddy currents is to construct stators and rotors from laminations or thin layers of steel that are oriented to lie as parallel as possible with the lines of magnetic flux in the machine, and separated by insulating layers. Thin layers limit the size of the current loops that can form and, because current is proportional to the area of the loop, minimizing the area of the loop by minimizing the thickness of each lamination also minimizes the amount of current that can flow. Because the power dissipated by an eddy-current loop is proportional to the square of the current, small reductions in current bring much larger reductions in losses.

Laminations for industrial motors are typically made from steel between 0.35 and 0.5 mm thick, and the trend currently is to reduce these thicknesses as much as is practically possible while still maintaining reasonable ease in assembling the motor.

In most high-volume electrical vehicle traction motor/generator and industrial applications, motor laminations are made from silicon steel. The steel used can be either cold rolled magnetic lamination steel, which is annealed and oxide-coated after stamping into a desired lamination shape, or fully processed non-grain oriented steel that is fully processed and is, thus, used without further processes for rotor or stator construction.

### BRIEF SUMMARY OF THE INVENTION

In an embodiment, the present disclosure is directed to electric equipment manufacturing using laminations made from steel with improved magnetic properties compared to other known steel laminations. These improvements are unexpectedly realized when processing of fully non-grain, fully processed electrical steel after stamping, namely, by annealing and oxide coating the stamped laminations. More specifically, it has been found that annealing and oxide coating fully processed non-grain oriented steel after stamping reduces core loss, increases permeability, and improves interlaminar resistance compared to Epstein and Franklin results from the material prior to stamping. The improved magnetic properties make motors more efficient and allow a smaller amount of steel to be used than if the steel had not been processed after stamping. This result is unexpected because, at least annealing the material improves the properties of the material even compared to its original, fully processed state.

In one embodiment, the process involves providing a stamped lamination for a rotor or stator of a motor or generator. The stamped lamination is made from fully processed, non-grain oriented electrical steel. The stamped lamination is then annealed, and then allowed to develop an oxide coating under a controlled environment. The resulting laminations have improved magnetic permeability, reduced eddy currents, and improved interlaminar resistance compared to the same material prior to stamping.

### BRIEF DESCRIPTION OF THE SEVERAL VIEWS OF THE DRAWING(S)

Fig. 1 is an outline view of a pair of laminations in accordance with the disclosure.
Fig. 2 is a flowchart for a method in accordance with the disclosure.
Fig. 3 is a annealing process in accordance with the disclosure.
Fig. 4 is a graph showing improvements in induction v. core loss for laminations in accordance with the disclosure.
Fig. 5 is a graph showing improvements in induction v. permeability for laminations in accordance with the disclosure.

### DETAILED DESCRIPTION OF THE INVENTION

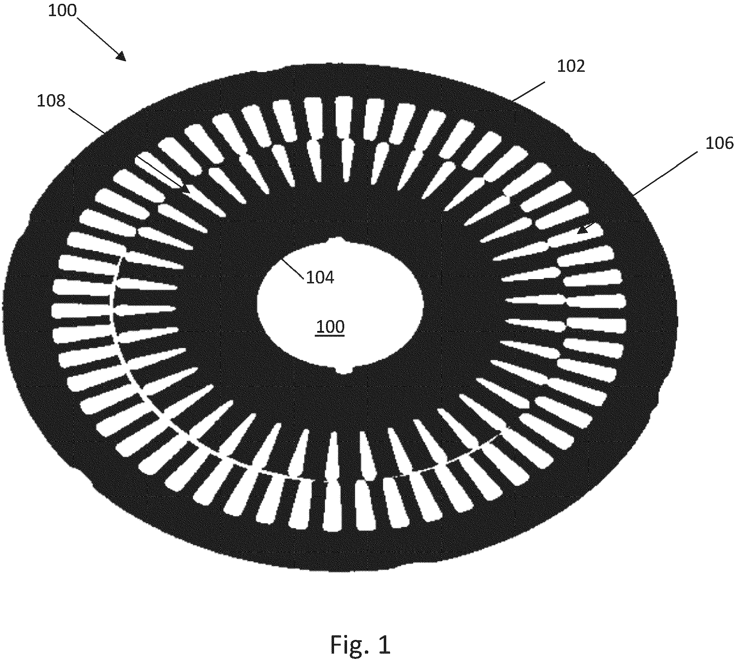

Fig. 1 is an outline view of a pair of laminations 100 in accordance with the disclosure. The laminations 100 are exemplary and may take on various other shapes depending on application and size/frame of the motor/generator they may be used in. Further, while two laminations are shown that are configured to be used for construct a rotor and a stator, it should be appreciated that laminations used to construct only a rotor and/or only a stator can also be used.

The laminations 100 may be part of an electric motor or generator and include a stator lamination 102 and a rotor lamination 104. The stator lamination 102 includes a plurality of cavities 106, which are open in a radially inward direction and accommodate electrical conduits in the completed electrical equipment. The shape of the cavities 106 is determined by the stamping die and can vary from what is shown depending on the particular design of the electrical equipment. Similarly, the rotor lamination 104 includes slots 106, which are open in a radially outward direction, such that they face the cavities 106, and which also accommodate electrical conduits in the completed electrical equipment. As is known, interacting magnetic fields of the rotor and stator cause the rotor to rotate within the stator of a motor or, similarly, rotation of the rotor causes electrical power to be delivered in the conduits of the stator in a generator. These laminations are stacked into a rotor and stator structure, which can also include other components such as permanent magnets and the like.

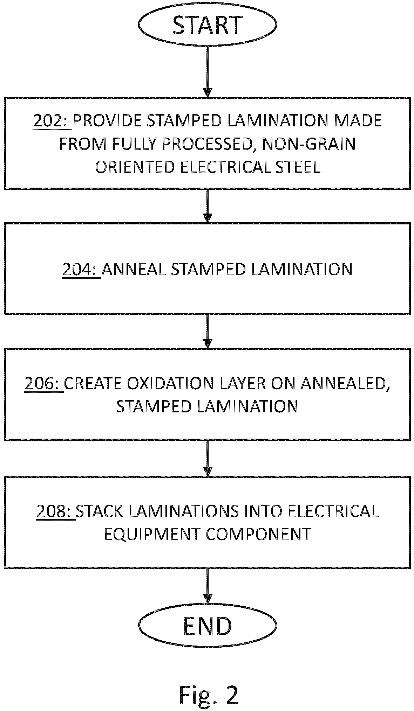

A flowchart for a method of manufacturing a motor using laminations is shown in Fig. 2. At 202, a stamped lamination is provided. The material of the stamped lamination is fully processed, non-grain oriented electrical steel. The material may be provided in a roll for stamping into a desired shape, or it may alternatively be provided as a completed stamping.

In a typical application, the stamped lamination would be stacked in a stator or a rotor component for a motor or generator, and bonded with other laminations in the stack to produce the finished product. The bonding may include injection of a thermoplastic material to hold the stack together, welding, use of an adhesive between the layers, and the like.

In the illustrated embodiment, the stamped laminations, for example, the laminations 102 and 104 shown in Fig. 1, are annealed at 204, and then an oxide layer is allowed to form thereon at 206. The thickness of the oxide layer may be selected depending on the time and environmental conditions used to form the oxide.

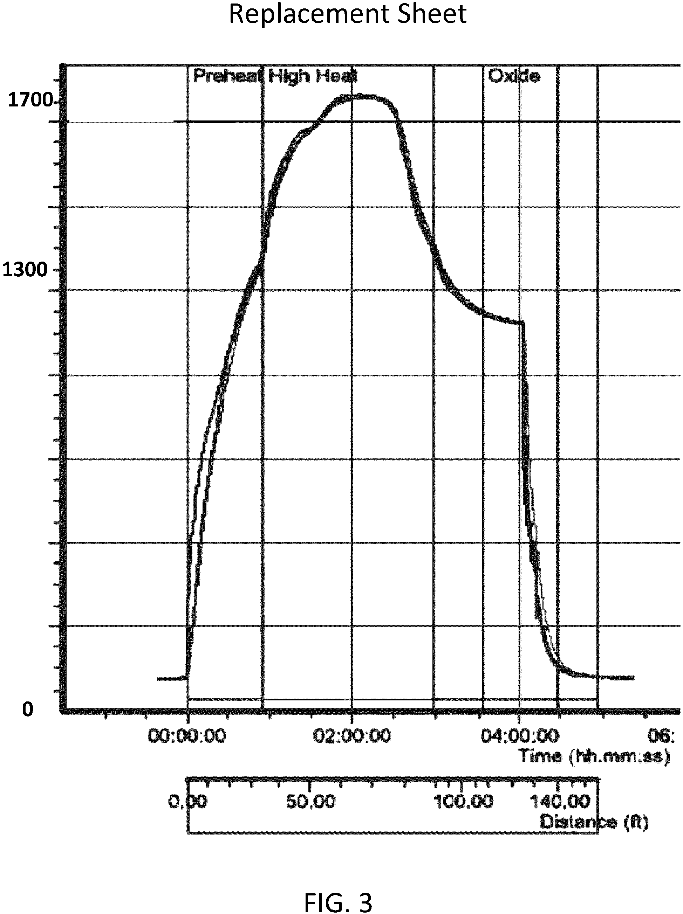

A chart showing one possible annealing and oxidation process is shown in Fig. 3. The chart of Fig. 3 shows time, in hours, along the primary horizontal axis, and distance along a secondary axis. Temperature is plotted along the vertical axis. The temperature trace over distance is merely an exemplary embodiment and may be adjusted depending on steel composition and process variations. As shown in the graph, the stamped laminates are preheated for the first hour as they travel through a long oven for the first hour. Then a second heating up to a high temperature is conducted for the second hour up to a temperature of between 1300 to 1700 degrees F. A gradual cooling down to an oxidation temperature is carried out for the next two hours. The oxidation temperature, for example, of between 700 and 1000 degrees F is conducted in a controlled environment where an oxidation layer forms on the laminates. It should be appreciated that the temperature, time, and dwell time of laminations in the annealing furnace can be adjusted depending on various parameters including steel material composition, lamination thickness, and the like.

In the illustrated embodiment, the environment in the annealing furnace is carried in the presence of an annealing gas such as Dₓ, which includes H, N, CO₂, and CO, or HNₓ gas, which primarily includes H and N in gas form. During the oxidation phase, a layer FE₃O₄ forms on all exposed faces and surfaces of the laminates, including the end faces and the internal contour surfaces of the cavities and the slots, the latter of which might have remained uncoated had the material been used immediately after stamping, as is typical.

Returning now to Fig. 2, after the annealing occurs at 204, and the oxidation layer forms at 206, the laminations are stacked into a component of an electrical machine such as a rotor or a stator at 208.

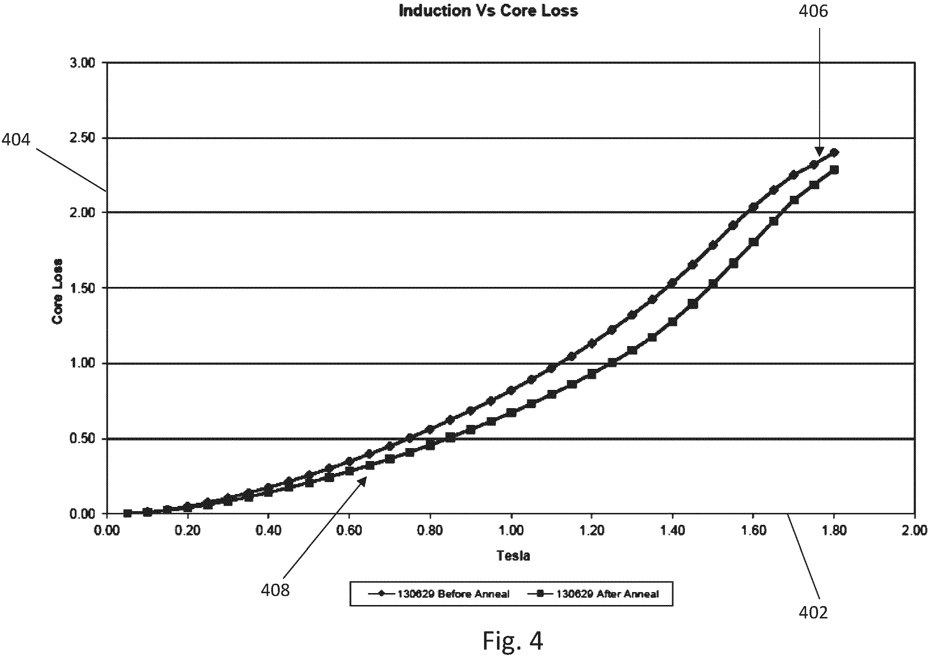

The resulting electrical components that are assembled using the laminations that have been treated with the method shown in Fig. 2 exhibit improved properties. A graph showing induction vs. core loss is shown in Fig. 4. In this graph, magnetic core loss in Tesla is plotted along the horizontal axis 402, and core loss is potted along the vertical axis 404. As can be seen, a first curve 406 representing a component before annealing and oxidation, and a second curve 408 representing that same component after annealing and oxidation, are plotted on the same axes. As shown by the difference between the curves, the core loss of the annealed and oxidized components is consistently lower across the entire range of induction strength.

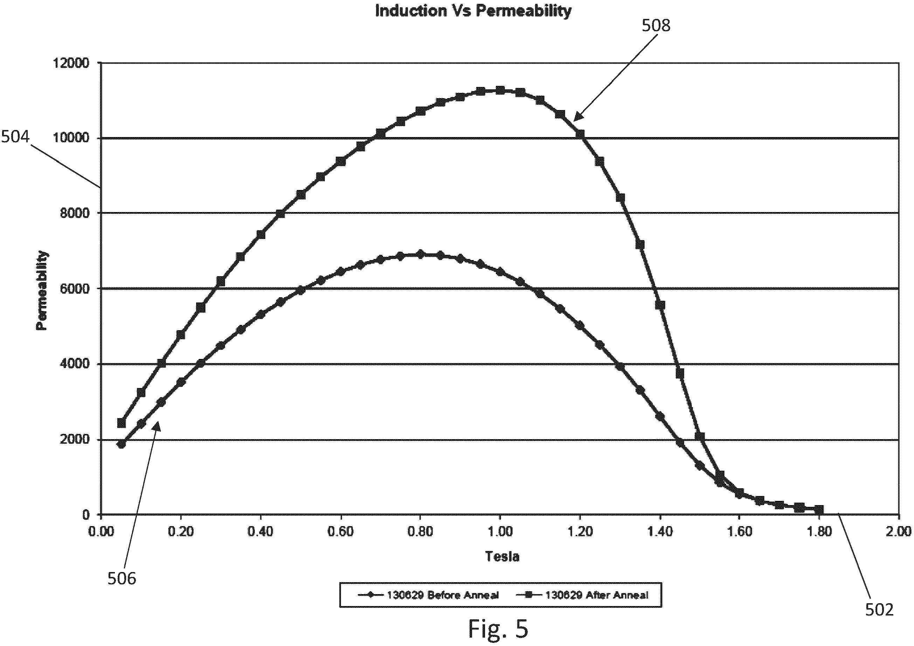

A graph showing induction vs. permeability is shown in Fig. 5. In this graph, induction (Tesla) is plotted against the horizontal axis and permeability is plotted against the vertical axis. A first curve 506 representing a component before annealing and oxidation, and a second curve 508 representing that same component after annealing and oxidation, are plotted on the same axes. As shown by the difference between the curves, the permeability of the annealed and oxidized components is consistently considerably higher across the entire range of induction strength.

The results of the annealing and oxidation process of fully finished, non-grain oriented electrical steel, for example, CrN non-cold rolled steel, are unexpected. In the illustrated embodiments, the material used is electrical steel made without special processing to control crystal orientation, non-oriented steel, which usually has a silicon level of 2 to 3.5% and has similar magnetic properties in all directions, i.e., it is isotropic. Cold-rolled non-grain-oriented steel is often abbreviated to CRNGO. The material properties of this steel changed considerably after the annealing process, which is otherwise a process that is generally known and used to restore material properties, not improve them in and of itself, as it has been used for here. For example, the conductivity as measured by a Franklin test on the surface of the laminates shows a marked improvement. Table 1 below summarizes the results of tests conducted in base samples and samples that were annealed and oxidizes.

**Table 1:**

| **Coil** | **Before L Furnace 1** | **Before T Furnace 1** | **After L Furnace 1** | **After T Furnace 1** |
|---|---|---|---|---|
| 606196 | 0.478 | 0.397 | 0.542 | 0.005 |
| 606197 | 0.051 | 0.056 | 0.004 | 0.549 |
| 606198 | 0.009 | 0.002 | 0.495 | 0.035 |
| 606199 | 0.464 | 0.318 | 0.002 | 0.006 |
| 606200 | 0.048 | 0.004 | 0.002 | 0.001 |
| | | 0.183 | | 0.164 |
| | | | | 10% |

In the above table, it can be seen that an average improvement of about 10% is observed in the electrical isolation for interlayer current transfers between laminations.

All references, including publications, patent applications, and patents, cited herein are hereby incorporated by reference to the same extent as if each reference were individually and specifically indicated to be incorporated by reference and were set forth in its entirety herein.

The use of the terms "a" and "an" and "the" and "at least one" and similar referents in the context of describing the invention (especially in the context of the following claims) are to be construed to cover both the singular and the plural, unless otherwise indicated herein or clearly contradicted by context. The use of the term "at least one" followed by a list of one or more items (for example, "at least one of A and B") is to be construed to mean one item selected from the listed items (A or B) or any combination of two or more of the listed items (A and B), unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

## Claims

1. A method for preparing a lamination for use in constructing electrical equipment, comprising:
providing a stamped lamination, the stamped lamination having been stamped using a stamping die from a sheet material, the sheet material being made from fully processed, non-grain oriented electrical steel;
heating the stamped lamination in an annealing furnace to produce an annealed stamped lamination; and
forming an oxidation layer on the annealed stamped lamination to produce an oxidized and annealed stamped lamination.

2. The method of claim 1, wherein the oxidized and annealed stamped lamination is configured for use in constructing an electric motor or an electric generator.

3. The method of claim 1, wherein the oxidized and annealed stamped lamination is a stator lamination that includes a plurality of cavities that are open in a radially inward direction and are configured to accommodate therein electrical conduits.

4. The method of claim 1, wherein the oxidized and annealed stamped lamination is a rotor lamination that includes a plurality of slots that are open in a radially outward direction.

5. The method of claim 1, further comprising stamping the stamped lamination using the stamping die.

6. The method of claim 1, wherein the heating includes preheating the stamped laminates.

7. The method of claim 6, further comprising performing a second heating of the stamped laminates up to an annealing temperature after the preheating.

8. The method of claim 7, wherein the annealing temperature is between 1300 to 1700 degrees F.

9. The method of claim 7, further comprising cooling down the stamped laminate after the second heating to an oxidation temperature.

10. The method of claim 9, wherein the oxidation temperature is between 700 and 1000 degrees F.

11. The method of claim 9, further comprising maintaining the annealed stamped laminate at the oxidation temperature for a time period and in a presence of an oxidation atmosphere.

12. The method of claim 11, wherein the time period is about 2 hours.

13. The method of claim 11, wherein the oxidation atmosphere causes a layer of Fe₃O₄ to form on the annealed stamped laminate.

14. The method of claim 1, further comprising heating the stamped laminate in the presence of an annealing atmosphere.

15. The method of claim 14, wherein the annealing atmosphere includes an annealing gas that includes at least one of H₂, N₂, CO₂, and CO.
